# EUROPEAN PATENT APPLICATION

(11) **EP 2 985 885 A1**
(43) Date of publication of application: **17.02.2016**
(21) Application number: 15180075.2
(22) Date of filing: 06.08.2015
(51) Int. Cl.: H02K 1/32, H02K 3/487, H02K 9/20

(54) **THERMALLY CONDUCTIVE ROTOR WEDGES**

(30) Priority: 11.08.2014 US 201414456389
(71) Applicant: Hamilton Sundstrand Corporation, Charlotte, NC 28217 (US)
(72) Inventor: PATEL, Dhaval, Loves Park, IL 61111 (US); FRISKE, Gordon W., Rockford, IL 61107 (US); ABELS, Jan H., Rockford, IL 61107 (US)
(74) Representative: Hall, Matthew Benjamin

(57) **Abstract**

A wedge for an electrical machine core (102) includes a hollow wedge body including a wedge wall extending in an axial direction. The wedge wall (112) separates an interior hollow space (114) of the wedge body from a space exterior to the wedge body. A phase change material (116) can be housed within the interior hollow space of the wedge for regulating heat transfer through the wedge. An electrical machine includes a wound rotor (100) including an electrical steel core (102) and a plurality of wedges mounted to the electrical steel core with electrical machine windings (108) retained between each wedge and the core body (104). Each of the wedges includes a hollow wedge body as described above.

## Description

### BACKGROUND OF THE INVENTION

### 1. Field of the Invention

The present disclosure relates to heat transfer, and more particularly to heat transfer in electrical machines.

### 2. Description of Related Art

Traditional electrical machines, such as motors and generators, generate heat in operation. The heat generation is a limiting factor on the operational capacity of a given electrical machine. Various cooling techniques are typically used, including air and oil cooling. For example, some systems directly cool the windings by convection with flowing air or oil. Other configurations use flowing fluids to cool the surface of components which contact the winding (e.g., an electrical core, wedges, or sleeve) and rely on heat conduction through the rotor components to convey heat from the windings to the flow of coolant. The cooling methods can be utilized on both rotor and stator windings.

Such conventional methods and systems have generally been considered satisfactory for their intended purpose. However, there is still a need in the art for improved heat transfer in electrical machines. The present disclosure provides a solution for this need.

### SUMMARY OF THE INVENTION

A wedge for an electrical machine core includes a hollow wedge body including a wedge wall extending in an axial direction. The wedge wall separates an interior hollow space of the wedge body from a space exterior to the wedge body. A phase change material can be housed within the interior hollow space of the wedge for regulating heat transfer through the wedge.

The phase change material can include any suitable salt mixture. Some examples of the base salt in suitable mixtures include sodium hydroxide, sodium nitrite, sodium nitride, and sodium chloride. The phase change material can have a solid to liquid phase change temperature ranging from about 190°C to about 260°C under standard atmospheric conditions.

The wedge wall can have a substantially constant thickness at a cross-section of the wedge body perpendicular to the axial direction. The wedge wall can include aluminum, titanium, or any other suitable material, and can be made using additive manufacturing, machining, or any other suitable process.

An electrical machine, such as a wound field synchronous machine, includes a rotor, which includes an electrical steel core and windings. The rotor is mounted in proximity to a stator. The electrical core and windings include a core body and a plurality of wedges mounted to the core body with windings retained between each wedge and the core body. Each of the wedges includes a hollow wedge body as described above.

The electrical machine can include an outer housing and stator with the rotor mounted therein for rotation relative thereto. A direct spray cooling component can be operatively connected to the rotor to spray cooling fluid on end windings retained between the wedges and electrical steel core. It is also contemplated that a sleeve can be mounted about the electrical steel core, thus containing the electrical steel core, windings, and wedges, wherein the sleeve is operatively connected to receive cooling fluid for circulation within the winding to cool the windings. The electrical steel core and wedges can include cooling channels operatively connected to receive cooling fluid to cool the winding by thermal conduction through the core body to the cooling channels.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below by way of example only and with reference to certain figures, wherein:

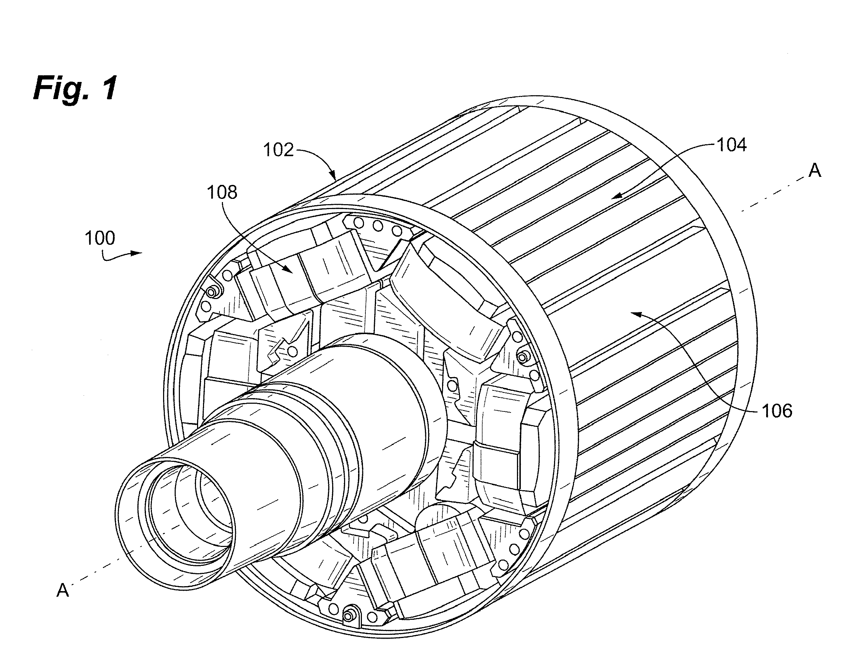

Fig. 1 is a perspective view of an exemplary embodiment of a wound rotor constructed in accordance with the present disclosure, showing the core body, the windings, and the wedges;

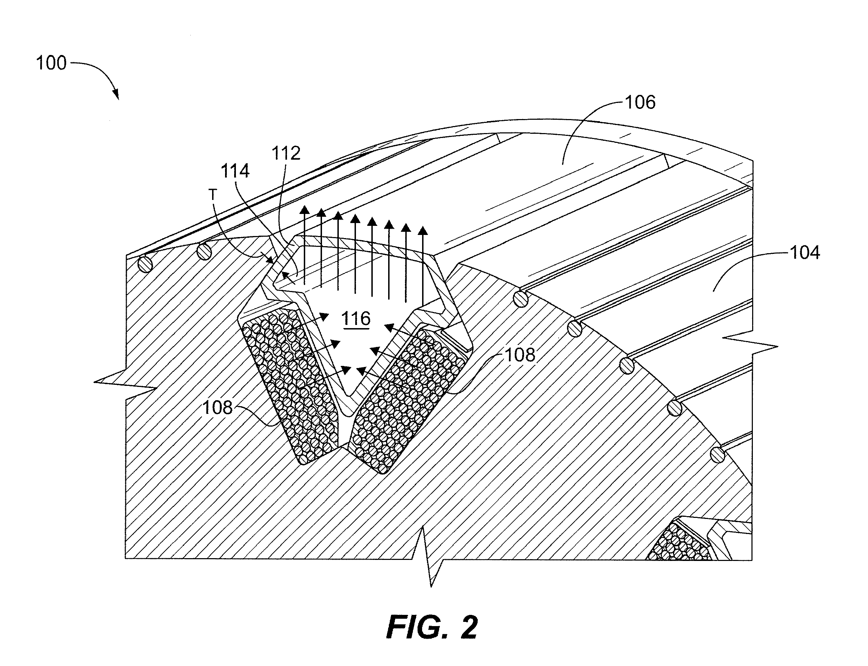

Fig. 2 is a cross-sectional perspective view of the wound rotor of Fig. 1, schematically showing the heat flow from the windings, into the phase change material within the hollow wedge body, and out of the wedge;

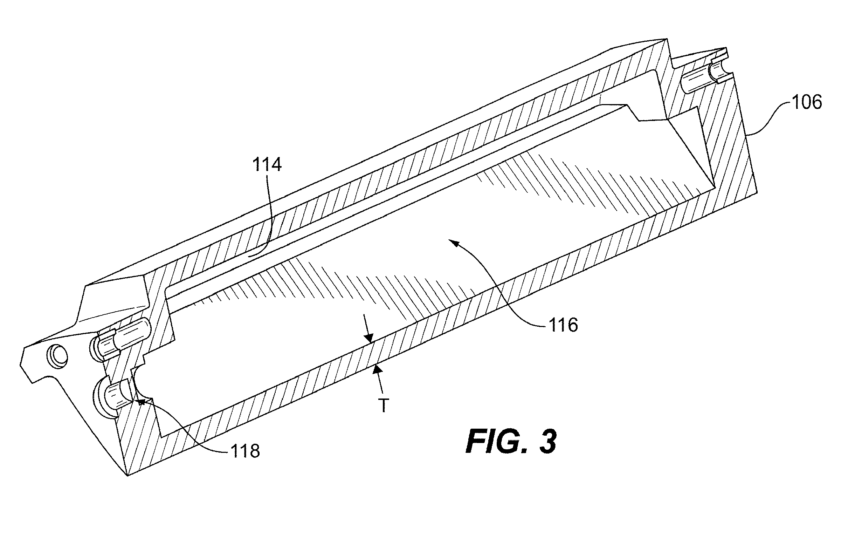

Fig. 3 is a cross-sectional perspective view of the wedge of Fig. 2, showing the plug for sealing the phase change material within the hollow wedge body;

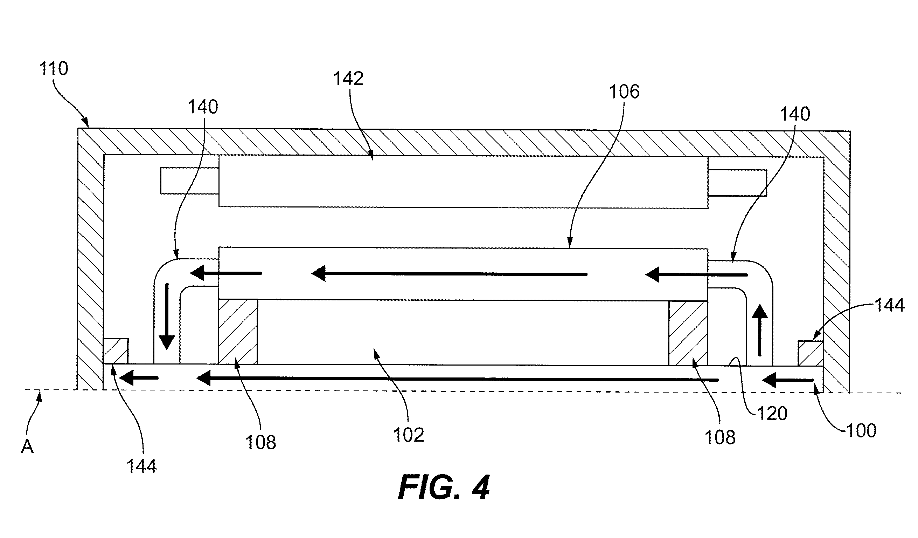

Fig. 4 is a schematic diagram view of an exemplary embodiment of an electrical machine constructed in accordance with the present disclosure, showing cooling fluid flowing into the windings for cooling in conjunction with the hollow wedge bodies, where the view is sectioned through the longitudinal centerline of the wedge;

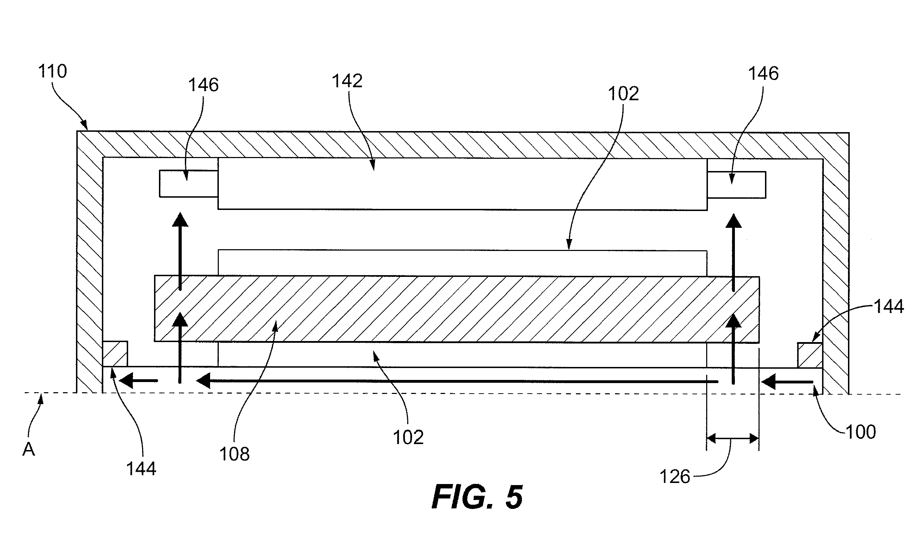

Fig. 5 is a schematic view of another exemplary embodiment of an electrical machine constructed in accordance with the present disclosure, showing spray cooling components for cooling by way of the end windings in conjunction with the hollow wedge bodies, where the view is sectioned through the longitudinal centerline of the core body;

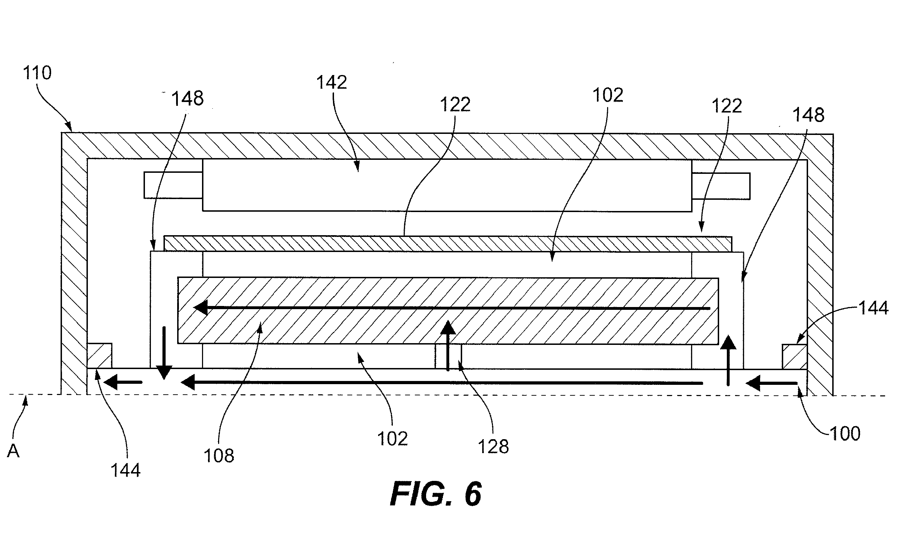

Fig. 6 is a schematic view of another exemplary embodiment of an electrical machine constructed in accordance with the present disclosure, showing a rotor with flood cooling for cooling in conjunction with the hollow wedge bodies, where the view is sectioned through the longitudinal centerline of the core body; and

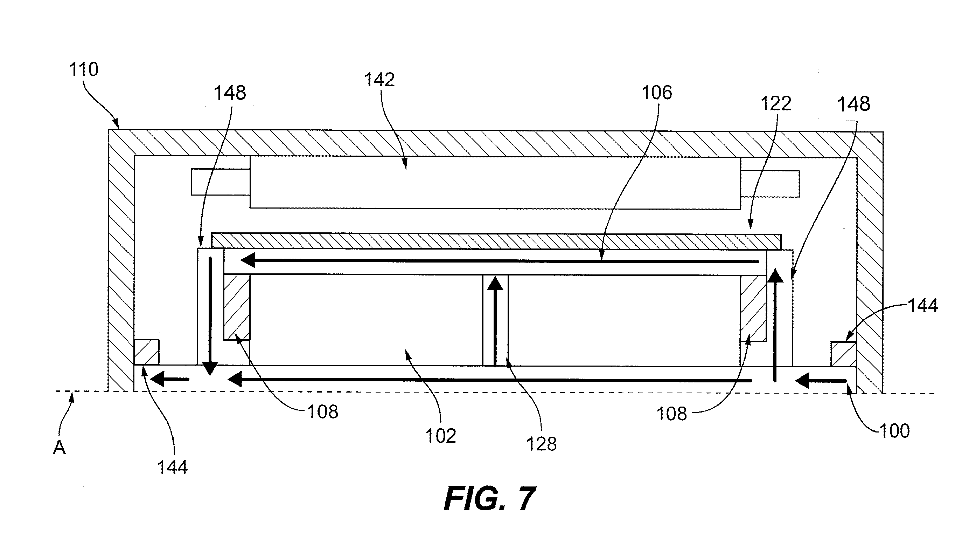

Fig. 7 is a schematic view of another exemplary embodiment of an electrical machine constructed in accordance with the present disclosure, showing a rotor with flood cooling for cooling in conjunction with the hollow wedge bodies, where the view is sectioned through the longitudinal centerline of the wedge.

### DETAILED DESCRIPTION OF THE PREFERRED EMBODIMENTS

Reference will now be made to the drawings wherein like reference numerals identify similar structural features or aspects of the subject disclosure. For purposes of explanation and illustration, and not limitation, a partial view of an exemplary embodiment of a wound rotor in accordance with the disclosure is shown in Fig. 1 and is designated generally by reference character 100. Other exemplary embodiments of wound rotors in accordance with the disclosure, or aspects thereof, are provided in Figs. 2-6, as will be described. The systems and methods described herein can be used to manage heat in wound rotors and the like.

A wound rotor 100 includes an electrical steel core 102 including a core body 104 and a plurality of wedges 106 mounted to the core body with electrical machine windings 108 retained between each wedge 106 and the core body 104. An outer housing 110, not shown in Fig. 1, but see Figs. 4-6, houses the wound rotor 100. Wound rotor 100 is mounted in housing 110 for rotation relative thereto. The example shown in Fig. 1 is for a rotor, however those skilled in the art will readily appreciate that the systems and methods disclosed herein can readily be applied to stators as well. The example shown in Fig. 1 includes windings for six poles, however those skilled in the art will readily appreciate that any suitable number of poles can be used.

With reference now to Fig. 2, one of the wedges 106 is shown in cross-section. Wedge 106 includes a hollow wedge body that has a wedge wall 112 extending in an axial direction, e.g., in the direction of axis A identified in Fig. 1. Wedge wall 112 separates an interior hollow space 114 of the wedge body from a space exterior to the wedge body. A phase change material 116 is housed within interior hollow space 114 for regulating heat transfer through wedge 106.

As indicated schematically with heat flow arrows in Fig. 2, heat generated in windings 108 can flow into wedge 106, e.g., at the inner diameter portion of wedge 106. The heat can be dissipated from the outer diameter portion of wedge 106, where the surface area and thermal gradient are greater. During elevated heat generation, such as when wound rotor 100 is operating at high capacity as in a surge in electrical load, phase change material 116 can absorb a considerable amount of heat by changing phase, e.g., from a solid to a liquid. This heat can subsequently be released from phase change material 116 and dissipated from wedge 106, for example over time when wound rotor 100 is operating at a lower capacity. As heat dissipates from phase change material 116, the phase change reverses to make ready for the next high capacity event. In this manner, wedge 106 can enhance heat transfer during transients, such as surge modes, where extra thermal management is needed, and can be used alone or in conjunction with other heat transfer mechanisms as described below. Phase change materials can act as a thermal damper, rapidly absorbing additional surge heat by changing phase, and releasing heat to outer cooled areas of an electrical machine gradually during re-crystallization.

Phase change material 116 can include, for example, a salt mixture with a base salt such as sodium hydroxide, sodium nitrite, sodium nitride and/or sodium chloride. The phase change material 116 can have a solid to liquid phase change temperature ranging from about 190°C to about 260°C under standard atmospheric conditions. The specific phase change material for a given application can be selected dependent on factors such as the insulation system temperature rating and the thermal management system, such that the phase change material is activated and stores heat prior to reaching the rating of the insulation system, for example. The specific latent heat of the phase change material can also be tailored for the insulation system and thermal management system capabilities for given applications.

With continued reference to Fig. 2, wedge wall 112 has a substantially constant thickness T at a cross-section of the wedge body perpendicular to the axial direction, e.g., the cross-section shown in Fig. 2. The wedge wall 112 can be made of aluminum, titanium, or any other suitable material, and can be made using additive manufacturing, machining, or any other suitable process.

Referring now to Fig. 3, phase change material 116 is sealed within interior hollow space 114 so that when the phase change material 116 is in a fluid phase, it will not escape. Phase change material 116 can be introduced into interior hollow space 114 through an orifice that is subsequently sealed with a plug 118.

With reference now to Figs. 4-6, it is contemplated that other cooling mechanisms can be included in addition to the phase change within wedges 106. Any suitable air or oil cooling mechanism can be used in conjunction with phase change material 116, wherein air and/or oil is used as a coolant to provide cooling for normal operation, and where phase change material 116 provides cooling at surge capacity.

For example, in Fig. 4, oil cooling ports 140 can be mounted to the wedges 106, wherein oil cooling ports 140 are operatively connected to receive cooling fluid, e.g., through shaft 120, for circulation through the wedges 106 to remove heat from the windings 108 via conduction cooling. For additional cooling, cooling fluid such as oil can be ported through channels cut in the core 102. The flow of coolant is indicated schematically by the flow arrows in Fig. 4. Stator windings 142 and bearings 144 are also indicated in Fig. 4.

In the example shown in Fig. 5, direct spray cooling components are operatively connected to the shaft of wound rotor 100 to spray cooling fluid on end windings 126 of wound rotor 100. The coolant flow into and out of wound rotor 100 and through the housing 110 is shown schematically with the flow arrows in Fig. 5, and the coolant spray to the end windings 126 is indicated schematically with spray lines. Stator end windings 146 are also indicated in Fig. 5. The cooling can be sprayed from the rotor, however, those skilled in the art will readily appreciate that cooling fluid can also be sprayed from the stator side. It can be more efficient to spray cooling fluid from the rotor because the centrifugal action of the rotor naturally forces the flow of cooling fluid.

In yet another example shown in Fig. 6, the wound rotor 100 can include a sleeve 122 and end caps 148 wherein cooling channels 128 are operatively connected to receive cooling fluid to cool windings 108 by flooding the wound rotor 100, forcing cooling fluid through the cooling channels 128, and through the windings 108. Fig. 7 shows the same flood cool system as shown in Fig. 6, only through a different cross-section. Sleeve 122 and cooling channels 128 are operatively connected to receive cooling fluid to cool windings 108 by flooding wedges 106, forcing cooling fluid through the cooling channels 128 and through the wedges 106 providing conduction cooling in addition to any cooling provided by the phase change material within the wedges 106.

A potential advantage of embodiments disclosed herein is that the enhanced heat transfer can allow for lower temperature materials to be used in the electrical machine construction. For example, components typically made of titanium or Inconel® alloys (available from Special Metals Corporation of New Hartford, New York) may now be made from aluminum. Hollow wedge cooling can be used without the need for major re-design or change of cooling schemes or winding design for existing electrical machine designs.

The methods and systems of the present disclosure, as described above and shown in the drawings, provide for electrical machines with superior properties including thermal management for transient operating conditions. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A wedge for an electrical machine core (102) comprising:
a hollow wedge body including a wedge wall (112) extending in an axial direction,
wherein the wedge wall separates an interior hollow space (114) of the wedge body from a space exterior to the wedge body.

2. A wedge as recited in claim 1, further comprising a phase change material (116) housed within the interior hollow space (114) of the wedge (106) for regulating heat transfer through the wedge.

3. A wedge as recited in claim 2, wherein the phase change material (116) includes a mixture of salt including at least one of sodium hydroxide, sodium nitrite, sodium nitride, or sodium chloride.

4. A wedge as recited in claim 1 or 2, wherein the phase change material (116) has a solid to liquid phase change temperature ranging from 190°C to 260°C under standard atmospheric conditions.

5. A wedge as recited in any preceding claim, wherein the wedge wall (112) has a substantially constant thickness (T) at a cross-section of the wedge body perpendicular to the axial direction.

6. A wedge as recited in any preceding claim, wherein the wedge wall (112) includes at least one of aluminum, Inconel ®, or titanium.

7. An electrical machine comprising:
a wound rotor (100) including an electrical steel core (102) and a plurality of wedges (106) mounted to the electrical steel core with electrical machine windings (108) retained between each wedge and the electrical steel core, wherein each of the wedges is as recited in claim 1.

8. An electrical machine as recited in claim 7, further comprising a phase change material (116) housed within the interior hollow space (114) of each wedge (106) for regulating heat transfer through the wedge.

9. An electrical machine as recited in claim 7 or 8, wherein each wedge wall (112) has a substantially constant thickness (T) at a cross-section of the wedge body perpendicular to the axial direction.

10. An electrical machine as recited in claim 7, 8 or 9, further comprising:
an outer housing (110) with the wound rotor (100) mounted therein for rotation relative thereto.

11. An electrical machine as recited in claim 10, further comprising a direct spray cooling component operatively connected to spray cooling fluid on end windings (126) of the wound rotor (100).

12. An electrical machine as recited in claim 10, further comprising a sleeve (122) mounted about the electrical machine core (102), wherein the sleeve is operatively connected to receive cooling fluid for circulation within the winding (108) to cool the electrical machine core.

13. An electrical machine as recited in claim 10, wherein the electrical machine core (102) includes cooling channels (128) operatively connected to receive cooling fluid to cool the winding (108) by thermal conduction through the core body (104) to the cooling channels.

14. An electrical machine as recited in any of claims 7 to 13, wherein the phase change material (116) includes a mixture of salt including at least one of sodium hydroxide, sodium nitrite, sodium nitride, or sodium chloride; and/or
wherein the phase change material (116) has a solid to liquid phase change temperature ranging from 190°C to 260°C under standard atmospheric conditions.

15. An electrical machine as recited in any of claims 7 to 14, wherein the wedge wall (112) includes at least one of aluminum, Inconel ®, or titanium.
